# EUROPÄISCHE PATENTSCHRIFT

(11) **EP 0 371 971 B1**
(45) Veröffentlichungstag und Bekanntmachung des Hinweises auf die Patenterteilung: **21.07.1993**
(21) Anmeldenummer: 88903755.2
(22) Anmeldetag: 09.05.1988
(51) Int. Cl.: F26B 3/08, B01J 8/36

(54) **SPRUDELSCHICHTKAMMER**
BUBBLE LAYER CHAMBER
CHAMBRE A LIT BOUILLONNANT

(43) Veröffentlichungstag der Anmeldung: 13.06.1990
(60) Teilanmeldung: 91104146.5
(73) Patentinhaber: BÜHLER AG, 9240 Uzwil (CH)
(72) Erfinder: ROSSE, Roger, CH-6020 Emmenbrücke (CH)
(74) Vertreter: Büchel, Kurt F., Dr.
(86) Internationale Anmeldenummer: CH8800086
(87) Internationale Veröffentlichungsnummer: WO8911073

(56) Entgegenhaltungen:
- AT-B- 380 331
- AU-B- 760 066
- CH-A- 665 473
- DE-A- 2 006 366
- DE-A- 3 325 967
- DE-A- 3 424 841
- DE-B- 1 280 756
- FR-A- 1 352 614
- FR-A- 1 478 224
- FR-A- 2 355 863
- GB-A- 730 789
- GB-A- 1 122 644
- GB-A- 1 562 571
- US-A- 2 668 041
- US-A- 3 279 094

## Beschreibung

Die Erfindung betrifft eine Sprudelschichtkammer zum kontinuierlichen Kristallisieren und/oder Trocknen von Kunststoffgranulat. Aus der DE-PS 1 667 058 ist eine Sprudelschichtkammer bekannt geworden. Wie in allen Sprudelschichtapparaten ist dabei eine Schrägfläche, und zwar in Form eines zentralen, ein Rohr umfassenden Konus, vorgesehen, der einen Bereich geringerer Strömungsgeschwindigkeit schaffen soll, um so das in die Kammer eingebrachte Produkt dazu zu veranlassen, unter der Einwirkung des aufwärtsströmenden Fluides aufwärts zu sprudeln, jedoch in den Bereichen geringerer Strömungsgeschwindigkeit wieder abwärts zu sinken. Zweck dieser Massnahme ist eine gute Durchmischung und damit eine gleichmässige Behandlung des eingebrachten Gutes.

In der AU-B-7600/66 und auch in der GB-A-1 562 571 werden Wirbelschichtkammern beschrieben, die als Hochtemperaturreaktoren zur Durchführung von Prozessen wie dem der Verhüttung von Zink bzw. der Oxidationsbehandlung von gebrauchten Katalysatoren dienen. Derartige, bei hohen Temperaturen ablaufende Prozesse stellen keine besonderen Anforderungen an das Verweilzeitverhalten der in die Wirbelschicht eingebrachten Materialien.

Wenn hier von einer Behandlung des eingebrachten Produktes die Rede ist, so versteht es sich, dass auch umgekehrt das eingebrachte Produkt (Feststoff) auch dazu dienen kann, das hindurchfliessende Fluid entsprechend zu beeinflussen, etwa unerwünschte Gasbestandteile zu adsorbieren.

Herkömmliche Sprudelschichtkammern besitzen den Nachteil, nur für einen Chargenbetrieb geeignet zu sein. Soweit man bisher versucht hat, das Produkt innerhalb der Kammer in einen Umlauf um den zentralen Verdrängerkörper zu bringen, geschah dies im wesentlichen zur Verbesserung der Mischwirkung.

Der Erfindung liegt nun die Aufgabe zugrunde, die Vorteile einer bekannten Sprudelkammer beizubehalten, eine solche Kammer jedoch so auszugestalten, dass ein kontinuierlicher Betrieb möglich ist.

Diese Aufgabe wird durch die Verbindung der Merkmale des Anspruches 1 gelöst.

Besonders vorteilhaft ist es, wenn die Merkmale des Anspruches 4 verwirklicht sind. Zwar wurde bereits in der US-PS 3 360 867 vorgeschlagen, den Transport durch eine Druckdifferenz zwischen einzelnen Kammern eines Wirbelbettes vorzunehmen, d.h. es sollte das eingebrachte Produkt durch eine Energiedifferenz zwischen den einzelnen Kammern weiterbefördert werden. Nun ist der Aufwand zur Erzielung und Einhaltung einer vorbestimmten Druckdifferenz relativ gross, da mehrere, voneinander an sich getrennte Kammern vorzusehen sind, denen jeweils gesonderte Ventile und Regelschaltungen zuzuordnen sind. Darüber hinaus fällt der Druck selbstverständlich gerade in der ersten Kammer dann ab, wenn Material zugeführt werden soll, so dass der Betrieb hier nicht völlig gleichmässig erfolgen kann, mithin nur "quasi kontinuierlich" ist.

Um nun das Prinzip des Transportes mit pneumatischen Mitteln aufgrund einer Energiedifferenz auf einfache Art zu verwirklichen, wird es herstellungsmässig am einfachsten sein, wenn das Merkmal des Anspruches 5 verwirklicht ist. Auch das Merkmal des Anspruches 6 dient der Vereinfachung der Herstellung. Es hat sich gezeigt, dass eine Ausbildung nach dem Merkmal des Anspruches 7 besonders günstig ist, wobei die Verteilung der Lochflächen von der Zufuhrvorrichtung zum Auslauf hin zweckmässig entsprechend einer Zykloiden-Charakteristik erfolgt.

Die erfindungsgemässe Sprudelschichtkammer kann für unterschiedliche Verwendungszwecke eingesetzt werden. Besonders vorteilhaft erweist sie sich als Bestandteil eines Behandlungsturmes, der insbesondere für die Kristallisation und Trocknung von Polyestergranulaten geeignet ist. Ein derartiger Behandlungsturm ist in der zugehörigen Teilanmeldung Nr. 91104146.5 beschrieben, deren Inhalt hiermit als geoffenbart gilt.

Es ist überraschend, dass die Kristallisation in weniger als 3 Minuten erfolgt. Durch diese kurze Verweilzeit kann keine Hydrolyse erfolgen. Das bedeutet eine mehr als zehnmal raschere Kristallisationszeit gegenüber der bekannten Technik. Hierdurch können kleinere Apparaturen für den gleichen Massedurchsatz verwendet werden, wodurch eine wirtschaftlichere und materialsparende Herstellung von Polyester erzielt wird.

Es ist auch zweckmässig, mit vorgetrockneter Luft oder einem Inertgas die Sprudelschicht zu erzeugen. Hierbei ist es vorteilhaft, mit hoher Geschwindigkeit strömende heisse Gase über eine Ringscheibe zu führen und in den Sprudelraum zu führen, wobei es zweckmässig ist, das Heissgas über den Heizmantel des Trockners zu führen.

Zur Kristallisation in der Sprudelschicht bringen Temperaturen von 150 bis 180°C, die besten Resultate.

Die Verwendung eines Behandlungsturmes mit einer erfindungsgemässen Sprudelschichtkammer führt dazu, dass frisch zugeführtes Produkt sofort erfasst und nach oben gerissen wird, wodurch Agglomerate verhindert werden. Gerade dann, wenn eine Sprudelschichtkammer mit den Merkmalen des Anspruches 5 verwendet wird, ist auch die Wärmezufuhr, beispielsweise im Falle von Polyester, zufuhrseitig möglichst intensiv, damit ein Verkleben zwischen 80 und 120°C nicht eintreten kann.

Weitere Einzelheiten der Erfindung ergeben sich anhand der nachfolgenden Beschreibung von in der Zeichnung schematisch dargestellten Ausführungsbeispielen. Es zeigen:
- Fig.1: einen Längsschnitt durch eine erfindungsgemässe Sprudelschichtkammer in einem Behandlungsturm;
- Fig.2: einen Schnitt nach der Linie II-II der Fig.1, der den Siebboden der Sprudelschichtkammer in Draufsicht zeigt;
Gemäss Fig. 1 besteht die erfindungsgemässe Vorrichtung aus einem Sprudelschichtraum 1 als Kristallerteil und einer Ringkammer 2, welche zusammen mit der Kammer 3 den Trocknerteil bildet. Im Sprudelschichtraum 1 ist ein Verdrängungskörper 4 vorgesehen, welcher einen Auslauf 5 in seinem Sockel aufweist. Der Verdrängungskörper 4 schliesst den Innendurchmesser einer Belüftungsfläche 6. Die Belüftungsfläche 6 weist pneumatische Mittel 7 mit unterschiedlicher Anzahl in den einzelnen Segmenten, jedoch gleichem Durchmesser auf. Auf der Unterseite der Belüftungsfläche 6 ist ein Einlauftrichter 8 vorgesehen, welcher in die Kammer 2 führt in deren unterem Teil ein Konus 11 mit einer Austrittsöffnung 12 für das trockene Produkt vorgesehen ist.

Der Kristallerteil, welcher auch als Aufheizteil bezeichnet werden kann und der Trocknerteil sind von einem zylindrischen Mantel umgeben, der vorzugsweise aus einem Rohr besteht. Zur Verteilung der Luft ist in der Kammer 3 ein Kegel 10 vorgesehen, der mit einem Eintrittsstutzen 25 für Frischgas verbunden ist. Ein Vorlagesilo 13 ist über ein Dosiergerät 14 mit einem Eintrittsstutzen 15 verbunden, welcher in die Sprudelschichtkammer 1 mündet. Im Kopf des Kristallers ist ein Austrittsstutzen 16 und ein Abluftkamin 17 vorgesehen.

Ein weiterer Stutzen 18 führt über eine Leitung 30 auf einen Zyklon 19 und einen Behälter 20. Der Zyklon 19 führt über eine Leitung 31 auf einen Filter 21 und von hier über eine Leitung 32 auf einen Ventilator 22. Vom Ventilator 22 geht eine Leitung 33 zum Gaserhitzer 23, von welchem eine Leitung 34 auf den Stutzen 24 führt. Zur Frischgaszufuhr über den Stutzen 25 ist ein Erhitzer 26, ein Ventilator 27 und eine Konditionierungseinrichtung 28 vorgesehen.

In Fig. 2 ist die Anordnung und Verteilung der Bohrungen 7 in der Belüftungsfläche 6 gezeigt.

Im Bereich des Eintrittsstutzens 15 und des Verdrängungskörpers 4 ist eine Trennwand 29 vorgesehen, welche die Sprudelschichtkammer 1 abteilt. Die Anzahl der Bohrungen nimmt vom Sektor im Bereich des Eintrittsstutzens 15 zum Auslauf 5 ab.

Prinzipiell könnte die Grösse der Lochfläche vom Zufuhrstutzen 15 bis zum Auslauf 5 hin mehr oder minder stetig abnehmen, doch ist es für die Herstellung günstiger, wenn dies in Stufen erfolgt, so dass in einem dem Zufuhrstutzen benachbarten Sektor A die Lochfläche (in Vergleich zu den anderen Sektoren) am grössten ist, anschliessend in den Sektoren B kleiner und noch kleiner in den Sektoren C. Dadurch wird ein Verlauf erreicht, der annähernd zykloiden-Charakteristik besitzt, wobei das in der Behandlungskammer 1 befindliche Produkt in Sektor A soviel Energie zugeführt erhält, dass sich sein Fortbewegungsimpuls bis über den zweiten Sektor B hinaus noch fortsetzt, doch erhält das Material im Bereiche des Ueberganges vom zweiten Sektor B zum ersten Sektor C einen weiteren Bewegungsimpuls durch den so geschaffenen Energiegradienten, der eine gleichmässige Fortbewegung bis zum Auslauf 5 sichert. Dabei ist die Herstellung besonders einfach und mit einen einzigen Typ von Stanzwerkzeugen möglich, wenn die Lochungen der pneumatischen Mittel 7 untereinander jeweils gleich gross sind.

Anstelle der abnehmenden Anzahl der Oeffnungen gleicher Durchmesser, können aber auch die Durchmesser der Oeffnungen in Richtung vom Stutzen 15 zum Auslauf 5 bei gleicher Anzahl von Bohrungen abnehmen. Wesentlich ist, dass dem eintretenden Granulat zu Beginn eine möglichst grosse Menge an Heissluft entgegengeführt wird.

Im Betrieb der Vorrichtung wird beispielsweise feuchtes amorphes Polyestergranulat aus Polyethylenterephthalat aus dem Silo 13 über die Dosiereinrichtung 14 kontinuierlich über den Eintrittsstutzen 15 in den Sprudelschichtraum 1 dosiert. Ein Gasstrom aus konditionierter Luft bzw. Umluft strömt in einer Menge von 5 bis 50 kg/Stunde Luft je kg Granulatdurchsatz/Stunde unter gleichem Druck mit einer Temperatur von 150 - 180°C, vorzugsweise bei ca. 170°C durch die pneumatischen Mittel 7 der Belüftungsfläche 6 in den Sprudelschichtraum 1 und erfasst die eintretenden Granulate. Da die Gasmenge eine Fluidisierung des Granulats bewirkt und laufend neues Granulat eingetragen wird, entsteht ein Fluss des Granulats in Richtung Ausgang. Die im ersten Sektor spezifisch grössere Luftmenge bewirkt aber auch eine intensive Entstaubung des Granulats und erwärmt es bis zum Austritt aus dem Sprudelschichtraum 1 auf die vorgegebene Trocknertemperatur. Die mittlere Verweilzeit im Kristaller beträgt nicht mehr als 3 Minuten, vorzugsweise 1 - 3 Minuten. Das kristallisierte Granulat fliesst kontinuierlich durch die Oeffnung des Auslaufes 5 im Verdrängungskörper 4, durch den Einlauftrichter 8 in die Kammer 3. In der Kammer 3 bewegt sich die Granulatschüttung unter isothermen Bedingungen und eventuell unter geringem Vakuum durch ihr Eigengewicht über den Konus 11 und durch den Austrittsstutzen 12 zur Weiterverarbeitung, beispielsweise zum Aufschmelzen im Extruder. Die Neigung des Verdrängungskörper ist an ein bestimmtes Produkt angepasst und sollte für Polyester 50 bis 85 Grad aufweisen.

Zur Kristallisation des Granulats im Kristaller, bzw. im Aufheizteil, dient ein Luftstrom hoher Geschwindigkeit, der in der Regel aus entstaubter Umluft besteht, welche über das Filter 21, den Ventilator 22 in einem Erhitzer auf 150 - 180°C, vorzugsweise 170°C erhitzt wird. Der Luftstrom oder ein inertes Gas durchströmt die Ringkammer 2, welche gleichzeitig als Mantel des Trockners dient und so die isothermen Bedingungen im Innern gewährleistet. Die Geschwindigkeit des Gases wird so gewählt, dass sich die Höhe der Sprudelschicht in etwa der mittleren Höhe des Verdrängungskörpers 4 einstellt. Damit wird gewährleistet, dass einerseits kein Granulat in den Austrittsstutzen 18 der Umluft gelangt und anderseits eine wirksame Entstaubung erreicht wird. Die Ueberschussluft wird über den Stutzen 16 und den Abluftkamin 17 abgeführt.

Der Hauptteil der heissen Abluft wird über die Leitung 30 einem Zyklonabscheider 19 zugeführt, von Staub und Abrieb befreit. Der Staub wird im Behälter 20 gesammelt und verworfen. Zur Sicherheit ist ein Feinfilter 21 dem Zyklon 19 nachgeschaltet.

Zur Trocknung mit Luft wird diese über eine handelsübliche Entfeuchtungs- und Konditionierungsanlage 28 für Frischluft geführt, über den Ventilator 27 verdichtet, im Erhitzer 26 auf Trocknungstemperatur von gleichfalls 150 - 180°C, vorzugswiese 170°C, gebracht und über den Eintrittsstutzen 25 und den Konus 10 im Trocknungsgut verteilt. Die Gasmenge beträgt 0,5 bis 2 kg Luft/Stunde je kg Granulatdurchsatz je Stunde. Nach Aufnahme von Feuchtigkeit tritt die Abluft mit geringer Strömungsgeschwindigkeit durch den Auslauf 5 dem kristallisierten Granulat entgegen, durchströmt die Sprudelschicht und verlässt zusammen mit der Sprudelluft den Kristaller über den Stutzen 18.

Ein wesentlicher Vorteil der Erfindung ist in seiner einfachen, wirtschaftlichen Betriebsweise zur Erreichung einer gleichmässigen Qualität zu sehen. Es findet eine vollständige Entstaubung des Granulats statt. In der nachfolgenden Schüttung des Trockners entsteht kein neuer Abrieb. Die Vorrichtung ist ohne mechanisch bewegbare Einrichtungen, bevorzugt zur kontinuierlichen Trocknung von Polyestergranulat geeignet und wegen seiner Einfachheit wirtschaftlich herzustellen.

Die Vorrichtung ist jedoch auch zur Trocknung für ein Kunststoffgranulat ohne vorhergehende Kristallisation geeignet. In diesem Fall dient der als Kristaller bezeichnete Teil lediglich zur Aufheizung des Granulats. Soll ein beliebiges Kunststoffgranulat auf eine vorgeschriebene Endfeuchte getrocknet werden, muss das Trocknungsgas auf eine entsprechende Gleichgewichtsfeuchte eingestellt werden.

Der nur wenige Minuten dauernde Aufenthalt des Granulates im Sprudelschichtraum verhindert Schädigungen durch Hydrolyse. Die intensive Querstromerwärmung des Granulats bis zum Austritt aus dem Sprudelschichtraum ermöglicht den Eintritt des Granulats mit Trocknertemperatur in den Einlauftrichter, womit gewährleistet ist, dass durch die isotherme Endtrocknung Schwankungen in der Endfeuchte durch einen nicht Überblickbaren Temperaturverlauf vermieden werden.

## Patentansprüche

1. Sprudelschichtkammer (1) zum kontinuierlichen Kristallisieren und/oder Trocknen von Kunststoffgranulat, mit einer ringförmigen, gasdurchlässigen Belüftungsfläche (6), deren Innendurchmesser von einem über wenigstens annähernd die gesamte Betriebshöhe der Wirbel- und Sprudelschichtkammer (1) konzentrisch verlaufenden Verdrängungskörper (4) mit wenigstens im unteren Bereich nach oben abnehmendem Querschnitt abgeschlossen ist, wobei zwischen der äusseren Wand der Sprudelschichtkammer (1) und dem Verdrängungskörper (4) eine einzige Trennwand (29) angeordnet ist, wobei auf einer Seite der Trennwand (29) eine Zufuhrvorrichtung (15) für das Produkt, und auf der anderen Seite ein Auslauf (5) vorgesehen ist, und dass die ringförmige Belüftungsfläche (6) mit pneumatischen Mitteln (7) zur Erzeugung einer Sprudelschicht zur Unterstützung der Bewegung des Produktes von der Zufuhrvorrichtung (15) zum Auslauf (5) kombiniert ist.

2. Sprudelschichtkammer nach Anspruch 1, dadurch gekennzeichnet, dass der Verdrängungskörper (4) ein bis zur Spitze durchgehender Konus ist.

3. Sprudelschichtkammer nach einem der Ansprüche 1 oder 2, dadurch gekennzeichnet, dass der Auslauf (5) radial innen in der Kammer (1) vorgesehen und vorzugsweise als Aussparung des Verdrängungskörpers (4) in der Nähe der ringförmigen Belüftungsfläche (6) gestaltet ist, wobei die Aussparung insbesondere am unteren Rande des Verdrängungskörpers (4) vorgesehen ist.

4. Sprudelschichtkammer nach einem der vorhergehenden Ansprüche, dadurch gekennzeichnet, dass die pneumatischen Mittel (7) aus einer Anordnung von Lochungen in der Belüftungsfläche (6) bestehen, bei der die Lochfläche gegen den Auslauf (5) hin abnimmt.

5. Sprudelschichtkammer nach Anspruch 4, dadurch gekennzeichnet, dass die Anzahl der Lochungen pro Flächeneinheit in der Belüftungsfläche (6), ausgehend vom Bereich der Zufuhrvorrichtung (15), in Richtung gegen den Auslauf (5) hin abnimmt, wobei vorzugsweise die Lochfläche der einzelnen Lochungen jeweils gleich gross ist.

6. Sprudelschichtkammer nach Anspruch 4 oder 5, dadurch gekennzeichnet, dass die Abnahme der Lochflächen in Stufen erfolgt, wobei abschnittsweise die Lochflächengrösse jeweils gleich ist.

7. Sprudelschichtkammer nach einem der Ansprüche 4 bis 6, dadurch gekennzeichnet, dass die Abnahme der Lochflächen gegen den Auslauf (5) hin verlangsamt erfolgt, wobei im Bereich der Zufuhrvorrichtung (15) die Abnahme in kürzerem Abstand erfolgt als gegen den Auslauf (5) hin.

## Claims

1. A spouting-bed chamber (1) for the continuous crystallisation and/or drying of plastic granules, with an annular, gas-permeable aeration surface (6), the inside diameter of which is blanked off by a displacement body (4) running concentrically over approximately the total operating height of the fluidised- and spouting-bed chamber (1), which displacement body has an upwardly-decreasing cross-section at least in its lower region, wherein a single separator wall (29) is disposed between the outer wall of the spouting-bed chamber (1) and the displacement body (4), wherein a feed device (15) for the product is provided on one side of the separator wall (29) and an outlet (5) is provided on the other side, and that the annular aeration surface (6) is combined with pneumatic means (7) for producing a spouting-bed to assist the movement of the product from the feed device (15) to the outlet (5).

2. A spouting-bed chamber according to claim 1, characterised in that the displacement body (4) is a cone continuing up to the top.

3. A spouting-bed chamber according to one of claims 1 or 2, characterised in that the outlet (5) is provided radially inside the chamber (1) and is preferably fashioned as an opening in the displacement body (4) in the vicinity of the annular aeration surface (6), wherein the opening is provided in particular at the lower edge of the displacement body (4).

4. A spouting-bed chamber according to any one of the preceding claims, characterised in that the pneumatic means (7) consist of an arrangement of perforations in the aeration surface (6) in which the hole area decreases towards the outlet (5).

5. A spouting-bed chamber according to claim 4, characterised in that, starting from the region of the feed device (15), the number of perforations per unit area in the aeration surface (6) decreases in the direction towards the outlet (5), wherein the hole area of the individual perforations is the same size each time.

6. A spouting-bed chamber according to claims 4 or 5, characterised in that the hole areas decrease in stages, wherein the hole areas are of the same size within each particular section.

7. A spouting-bed chamber according to any one of claims 4 to 6, characterised in that the decrease in the hole areas lessens towards the outlet (5), wherein the decrease occurs over a shorter distance in the region of the feed device (15) than towards the outlet (5).

## Revendications

1. Chambre à lit bouillonnant (1) pour la cristallisation et/ou le séchage en continu de granulés à base de matière synthétique, avec une surface d'aération (6) annulaire perméable au gaz, dont le diamètre intérieur est délimité par un corps de pénétration (4) s'étendant concentriquement sur au moins à peu près la totalité de la hauteur fonctionnelle de la chambre à lit tourbillonnant et bouillonnant, avec une section transversale qui, au moins dans la zone inférieure, va en diminuant vers le haut, où entre la paroi extérieure de la chambre à lit bouillonnant (1) et le corps de pénétration (4) est disposée une paroi de séparation (29) unique, où d'un côté de la paroi de séparation (29) est prévu un dispositif d'amenée (15) pour le produit et, de l'autre côté, une évacuation (5), et en ce que la surface d'aération annulaire (6) est combinée avec des moyens pneumatiques (7) destinés à produire un lit bouillonnant, pour assister le mouvement du produit, allant du dispositif d'amenée (15) à l'évacuation (5).

2. Chambre à lit bouillonnant selon la revendication 1, caractérisée en ce que le corps de pénétration (4) est un cône continu jusqu'à la pointe.

3. Chambre à lit bouillonnant selon l'une des revendications 1 ou 2, caractérisée en ce que l'évacuation (5) est prévue radialement à l'intérieur de la chambre (1) et configurée de préférence sous forme d'échancrure du corps de pénétration (4), à proximité de la surface d'aération annulaire (6), l'échancrure étant prévu en particulier sur la bordure inférieure du corps de pénétration (4).

4. Chambre à lit bouillonnant selon l'une des revendications précédentes, caractérisée en ce que les moyens pneumatiques (7) sont composés d'un agencement de trous ménagés dans la surface d'aération (6), agencement pour lequel la surface des trous diminue en allant vers l'évacuation (5).

5. Chambre à lit bouillonnant selon la revendication 4, caractérisée en ce que le nombre de trous par unité de surface, dans la surface d'aération (6), en partant de la zone de dispositif d'amenée (15), diminue en allant vers l'évacuation (5), la surface de trous individuelle étant de préférence chaque fois la même.

6. Chambre à lit bouillonnant selon la revendication 4 ou 5, caractérisée en ce que la diminution des surfaces des trous s'effectue par étape, la taille des surfaces de trous dans une étape étant chaque fois la même.

7. Chambre à lit bouillonnant selon l'une des revendications 4 à 6, caractérisée en ce que la diminution des surfaces de trous vers l'évacuation (5) s'effectue de façon ralentie, la diminution s'effectuant suivant un espacement plus court dans la zone du dispositif d'amenée (15) que vers l'évacuation (5).
